# EUROPÄISCHE PATENTSCHRIFT

(11) **EP 2 665 613 B1**
(45) Veröffentlichungstag und Bekanntmachung des Hinweises auf die Patenterteilung: **15.10.2014**
(21) Anmeldenummer: 12704227.3
(22) Anmeldetag: 19.01.2012
(51) Int. Cl.: B60J 3/02

(54) **BEWEGUNGSEINRICHTUNG FÜR EIN KRAFTFAHRZEUG-INNENAUSSTATTUNGSTEIL UND INNENAUSSTATTUNGSTEIL**
MOVEMENT DEVICE FOR A MOTOR VEHICLE INTERIOR TRIM PART, AND INTERIOR TRIM PART
DISPOSITIF DE DÉPLACEMENT POUR UN ÉLÉMENT D'ÉQUIPEMENT INTÉRIEUR DE VÉHICULE AUTOMOBILE ET ÉLÉMENT D'ÉQUIPEMENT INTÉRIEUR

(30) Priorität: 20.01.2011 DE 102011009065
(43) Veröffentlichungstag der Anmeldung: 27.11.2013
(73) Patentinhaber: Johnson Controls Interiors GmbH & Co. KG, 47929 Grefrath (DE)
(72) Erfinder: WELTER, Patrick, F-57730 Lachambre (FR)
(74) Vertreter: Trinks, Ole
(86) Internationale Anmeldenummer: PCT/EP2012/000236
(87) Internationale Veröffentlichungsnummer: WO 2012/097992

(56) Entgegenhaltungen:
- EP-A2- 0 422 446
- EP-A2- 0 496 964
- US-A- 4 909 562

## Beschreibung

### Stand der Technik

Die Erfindung betrifft eine Bewegungseinrichtung für ein Innenausstattungsteil in einem Kraftfahrzeug. Desweiteren betrifft die Erfindung ein mit der erfindungsgemäßen Bewegungseinrichtung versehenes Innenausstattungsteil.

Solche Bewegungseinrichtungen sind allgemein bekannt. Beispielsweise sind aus den Druckschriften DE 10 2008 027 923 A1 und DE 10 2007 037 411 A1 Sonnenblenden für ein Kraftfahrzeug bekannt, welche jeweils relativ zu einem Dachhimmel des Kraftfahrzeugs zwischen einer Gebrauchsposition und einer Nichtgebrauchsposition verschwenkbar sind. Die Sonnenblenden weisen jeweils einen Spiegel und eine verschwenkbare Abdeckung auf, welche Teil einer Bewegungseinrichtung ist. Wenn die Sonnenblende in die Gebrauchsposition überführt ist, kann die Abdeckung zwischen einer den Spiegel abdeckenden Schließstellung und einer den Spiegel freigebenden Offenstellung verschwenkt werden. Die Abdeckung ist üblicherweise in Richtung der Schließstellung mit einem Federelement vorgespannt, welche beim manuellen Anstoßen der Abdeckung in Richtung der Schließstellung durch einen Benutzer die Abdeckung zusätzlich in Richtung der Schließstellung antreibt, um die Schließbewegung automatisch fortzusetzen.

Dies hat den Nachteil, dass die Abdeckung durch das Federelement nahezu während der gesamten Schließbewegung in Richtung der Schließstellung beschleunigt wird und daher am Ende der Schließbewegung durch Auftreffen auf ein im Wesentlichen unbewegliches Bauteil ruckartig abgebremst wird. Dieses ruckartige Abbremsen ist für einen Benutzer unansehnlich und verursacht zudem ein unerwünschtes Anschlagsgeräusch.

EP 0 496 964 A2 offenbart eine Bewegungseinrichtung gemäß dem Oberbegriff des Anspruchs 1.

### Offenbarung der Erfindung

Es ist die Aufgabe der vorliegenden Erfindung eine Bewegungseinrichtung zur Verfügung zu stellen, bei welcher eine Öffnungs- und/oder Schließbewegung eines beweglichen Bauteils in einer geräuscharmen und für den Benutzer ansehnlichen Weise ausgeführt wird. Insbesondere sollen hierfür ruckartige Abbremsbewegungen des beweglichen Bauteils vermieden werden. Gleichzeitig soll ferner aber eine vergleichsweise zügige Öffnungs- und/oder Schließbewegung gewährleistet werden.

Gelöst wird diese Aufgabe durch eine Bewegungseinrichtung für ein Innenausstattungsteil in einem Kraftfahrzeug gemäß Anspruch 1.

In vorteilhafter Weise wird hierdurch die Bewegung des gegenüber dem ersten Bauteils beweglichen zweiten Bauteils teilweise verzögert, so dass eine ruckartige Abbremsbewegung des zweiten Bauteils beim Erreichen der ersten Position oder der zweiten Position vermieden wird. Es wird somit insbesondere eine Art "Soft Close" Mechanismus für das Innenausstattungsteil des Kraftfahrzeugs realisiert. Dieser "Soft-Close" Mechanismus ist vorzugsweise sowohl für eine Schließbewegung, als auch für eine Öffnungsbewegung des zweiten Bauteils verwirklicht. Im Sinne der vorliegenden Erfindung bedeutet der Begriff "teilweise verzögert", dass die Bewegung des zweiten Bauteils entlang eines Bewegungspfades in Richtung der ersten oder zweiten Position insbesondere nur in einem Teilbereich des gesamten Bewegungspfades verzögert wird. Vorzugsweise umfasst der Bewegungspfad einen ersten Teilpfad und einen zweiten Teilpfad, wobei die Bewegungseinrichtung derart ausgebildet ist, dass die Verzögerung jeweils lediglich im zweiten Teilpfad auf das zweite Bauteil wirkt. Dies hat den Vorteil, dass trotz des "Soft Close" Mechanismus beispielsweise eine vergleichsweise zügige Öffnungs- und/oder Schließbewegung zu erzielen ist, da der erste Teilpfad ohne Verzögerung durchlaufen wird. Ein Verzögerungselement im Sinne der vorliegenden Erfindung ist insbesondere derart ausgebildet, dass die Bewegung des zweiten Bauteils mit nahezu konstanter Verzögerungswirkung unabhängig von der Winkelstellung des zweiten Bauteils im zweiten Teilpfad verzögert wird.

Erfindungsgemäß ist somit vorgesehen, die Öffnungs- und/oder die Schließbewegung des Deckels in einer für den Benutzer sehr angenehmen Weise einzuleiten, indem er die Abdeckung in die gerade gewünschte Bewegungsrichtung "öffnen" oder "schließen" einleitet und sich der Deckel über die verbleibende Bewegungsstrecke federunterstützt in die jeweilige Endposition bewegt. Dabei wird die Bewegung vor Erreichen des Endanschlags der Öffnungsposition und/oder der Schließposition verzögert.

Gemäß einer bevorzugten Ausführungsform ist vorgesehen, dass das zweite Bauteil über wenigstens eine Gelenkverbindung an das erste Bauteil angebunden ist, wobei das zweite Bauteil mittels der Gelenkverbindung relativ zum ersten Bauteil um eine Schwenkachse schwenkbar ist. Das Verzögerungselement ist insbesondere benachbart zu der wenigstens einen Gelenkverbindung angeordnet. Das Verzögerungselement ist um die Schwenkachse schwenkbar sowohl relativ zum ersten Bauteil, als auch relativ zum zweiten Bauteil gelagert. Dies hat den Vorteil, dass das Verzögerungselement sowohl gegenüber dem ersten Bauteil, als auch gegenüber dem zweiten Bauteil einen gewissen Freigang bezüglich der Schwenkbewegung um die Schwenkachse hat. Das Verzögerungselement ist hierdurch nicht über die gesamte Länge des Bewegungspfades mit dem ersten und dem zweiten Bauteil gekoppelt. Die Verzögerungswirkung wird demnach nur in einem Teilbereich des gesamten Bewegungspfades entfaltet. Vorzugsweise umfasst das Verzögerungselement ein scheibenartiges Bauelement, welches zwischen zwei Führungsaufnahmen des ersten Bauteils angeordnet ist, wobei zwischen dem scheibenartigen Bauelement und den Führungsaufnahmen jeweils ein Verzögerungsmedium, insbesondere ein zähflüssiges Verzögerungsmedium, vorzugsweise adhäsives Fett, angeordnet ist. Durch das zwischen den dem scheibenartigen Bauelement zugewandten Stirnflächen der Führungsaufnahmen und den Stirnflächen des Bauelements angeordneten adhäsiven Fett wird eine Relativbewegung zwischen dem scheibenartigen Bauelement und den Führungsaufnahmen mit einer nahezu konstanten Kraft gebremst, welche zudem unabhängig vom Auslenkungswinkel des zweiten Bauteils ist.

Erfindungsgemäß ist vorgesehen, dass das zweite Bauteil eine erste Mitnahmegeometrie aufweist, welche in einer ersten Zwischenposition mit einem komplementären ersten Anlagebereich des Verzögerungselements während der Bewegung des zweiten Bauteil von der ersten Position in die zweite Position in Anlage bringbar ist. In einer Ausführungsform weist das zweite Bauteil eine zweite Mitnahmegeometrie auf, welche in einer zweiten Zwischenposition mit einem komplementären zweiten Anlagebereich des Verzögerungselements während der Bewegung des zweiten Bauteils von der zweiten Position in die erste Position in Anlage bringbar ist. Das zweite Bauteil gelangt während der Schließ- und/oder Öffnungsbewegung erst bei Erreichen der ersten oder zweiten Zwischenposition in Kopplung mit dem Verzögerungselement, so dass erst ab der ersten oder zweiten Zwischenposition die Verzögerung eintritt. Dies hat den Vorteil, dass vor dem Erreichen der ersten oder zweiten Zwischenposition eine nicht-verzögerte und somit zügige Schließ- und/oder Öffnungsbewegung gewährleistet wird.

Erfindungsgemäß umfasst die erste Mitnahmegeometrie eine Einbuchtung im zweiten Bauteil, in welche zur Mitnahme des Verzögerungselements während der Bewegung des zweiten Bauteils von der ersten Zwischenposition in die zweite Position der als Ausbuchtung ausgebildete erste Anlagebereich eingreift, während gemäß einer Ausführungsform die zweite Mitnahmegeometrie einen nasenförmigen Vorsprung des zweiten Bauteils umfasst, welcher zur Mitnahme des Verzögerungselements während der Bewegung des zweiten Bauteils von der zweiten Zwischenposition in die erste Position in den als Nut ausgebildeten zweiten Anlagebereich eingreift.

Die Erfindung lässt sich insbesondere immer dann einsetzen, wenn ein Bauteil (hier das zweite Bauteil) mit Unterstützung durch einen Energiespeicher, beispielsweise eine Feder, ohne Zwischenstellung von einer ersten Endposition (erste Position) in eine zweite Endposition (zweite Position) bewegt werden soll. Beispielhaft, aber keineswegs einschränkend seien hier die Deckel von Schminkspiegeln, Aschenbechern, Handschuh-, Brillen- oder sonstigen Ablagefächern oder herausklappbare Handgriffe als zweites Bauteil genannt.

Anhand des Beispiels einer Schminkspiegelabdeckung in einer Sonnenblende für ein Kraftfahrzeug soll die Erfindung näher erläutert werden. Derartige Sonnenblenden sind üblicherweise klappbar am Dachhimmel des Fahrzeugs angebracht und liegen in Staustellung mit einer ersten Flächenseite am Dachhimmel an. Dabei ist die der ersten Flächenseite gegenüberliegende zweite Flächenseite für den Fahrzeuginsassen sichtbar. Nach dem Herunter-klappen der Sonnenblende in eine näherungsweise vertikale Verschattungsstellung vor der Windschutzscheibe weist diese zweite Flächenseite in Richtung der Windschutzscheibe und die erste Flächenseite wird für die Fahrzeuginsassen zugänglich. Es ist bekannt, erfindungsgemäße Sonnenblenden auf der ersten Flächenseite mit Funktionselementen, beispielsweise Spiegeln, Beleuchtungseinrichtungen oder Bedienelementen, auszustatten. Die Funktionselemente werden vorzugsweise zu einer Funktionseinheit kombiniert und mit einem Gehäuse in einer Vertiefung der ersten Flächenseite der Sonnenblende befestigt. Bevorzugt überdeckt eine Abdeckung die Funktionselemente in Nichtgebrauchsstellung zum Schutz vor ungewollten äußerlichen Einwirkungen und aus optischen Gründen. Erst nach dem Öffnen der Abdeckung werden die darunterliegenden Funktionselemente für den Fahrzeuginsassen bedienbar. So kann er beispielsweise die Beleuchtungseinrichtung durch einen Schalter betätigen. Bevorzugt ist es, die Betriebsweise zumindest einiger der Funktionselemente in Abhängigkeit der Öffnungsbewegung zu steuern. Beispielsweise schaltet sich bei Erreichen der geöffneten Endstellung der Abdeckung die für die Gesichtsfeldausleuchtung zuständige Beleuchtungseinheit ein, um beim Schließen der Abdeckung wieder zu erlöschen. Das Öffnen der Abdeckung erfolgt üblicherweise manuell betätigt. Beispielsweise wird die Abdeckung von Hand über die gesamte Wegstrecke in seine Öffnungs- und Schließstellung bewegt. Eine weitere Möglichkeit bietet eine Verriegelung, nach deren Auslösung sich die Abdeckung federunterstützt zumindest in seiner Öffnungsbewegung unmittelbar gegen den Endanschlag der Öffnungsstellung bewegt. Um das dabei auftretende Anschlaggeräusch zu vermeiden oder wenigstens zu verringern, greift man auf elastische Puffer oder angeformte Kunststofffedern zurück. Gelegentlich wird das Innere der Abdeckung mit einem textilen Überzug versehen, der den Endanschlag bei Erreichen der Schließposition dämpft. Weiterhin sind sogenannte Silikonbremsen bekannt, bei denen ein Fluid in einem Zylinder von einem Kolben verdrängt wird. Auf diese Weise werden z.B. der Deckel eines Aschers oder ein Dachhaltegriff über deren gesamte Auslenkungsspanne gebremst bewegt. Bei der erfindungsgemäße Bewegungseinrichtung wird nun die Bewegung der Abdeckung in einem Teilbereich des gesamten Bewegungspfades gebremst, so dass weder eine Verzögerung über die gesamte Auslenkungsspanne, noch eine Verzögerung nur am Endanschlag realisiert wird. Die Folge ist eine vergleichsweise ansehnliche, gleichmäßige und dennoch zügige Öffnungs- und/oder Schließbewegung der Abdeckung.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Figuren

Es zeigen
- **Figuren 1 bis 5**: schematische Perspektivansichten eines Innenausstattungsteils eines Kraftfahrzeugs, welches eine Bewegungseinrichtung gemäß einer beispielhaften Ausführungsform der vorliegenden Erfindung aufweist und
- **Figuren 6 bis 7**: schematische Schnittbildansichten eines Innenausstattungsteils eines Kraftfahrzeugs, welches eine Bewegungseinrichtung gemäß der beispielhaften Ausführungsform der vorliegenden Erfindung aufweist.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt. Die beigefügten Figuren stellen beispielhaft und schematisch eine Ausführung der Erfindung dar.

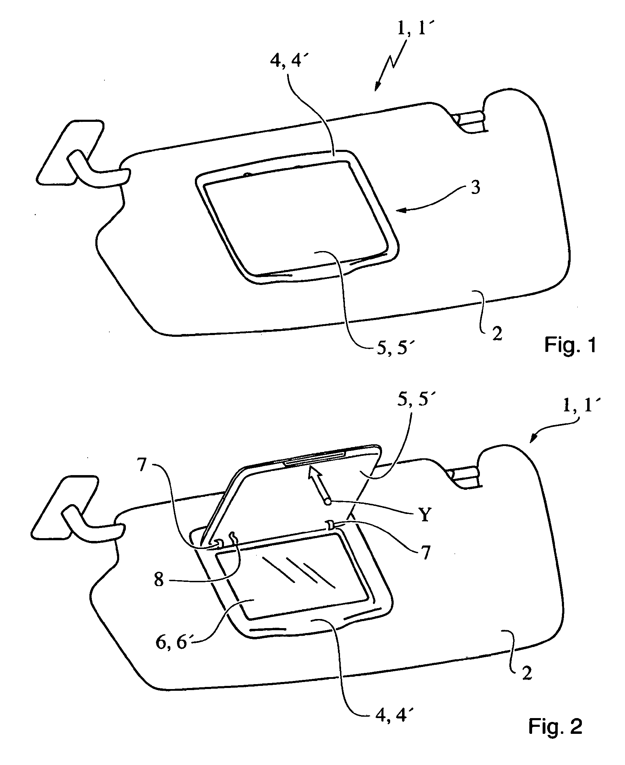

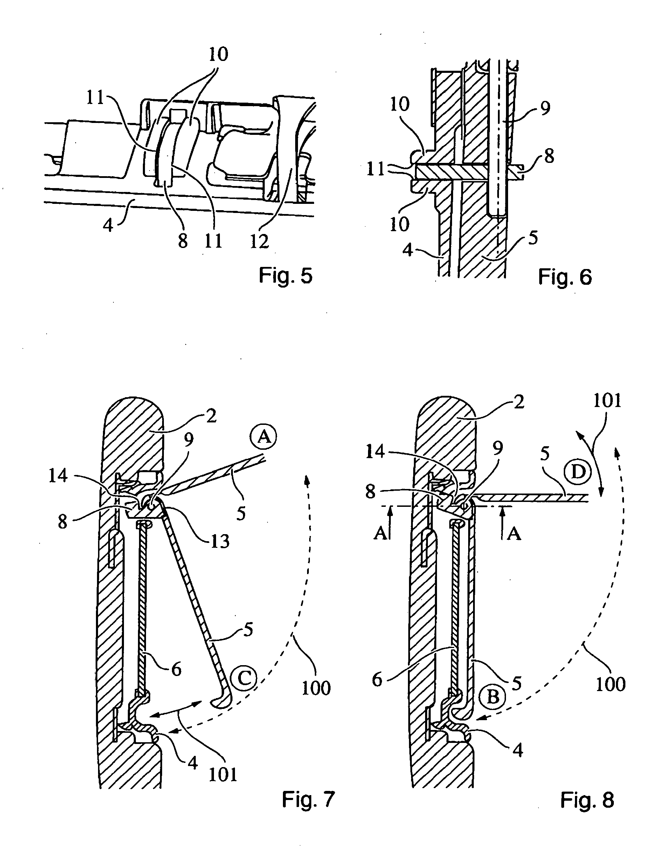

In Figuren 1 bis 8 ist ein als Sonnenblende 1 ausgebildetes Innenausstattungsteil 1' eines Kraftfahrzeuges illustriert, welches eine Bewegungseinrichtung gemäß einer beispielhaften Ausführungsform der vorliegenden Erfindung aufweist. Die Bewegungseinrichtung umfasst im vorliegenden Beispiel ein erstes Bauteil 4' und ein gegenüber dem ersten Bauteil 4' bewegliches zweites Bauteil 5'. Das zweite Bauteil 5' umfasst eine Abdeckung 5, welche an das als Rahmen 4 ausgebildete erste Bauteil 4' angebunden ist. Der Rahmen 4 fasst ferner ein Funktionselement 6' ein, welches im vorliegenden Beispiel als Spiegel 6 ausgebildet ist. Die Abdeckung 5 kann zwischen einer den Spiegel 6 abdeckenden Schließstellung (illustriert in Figur 1) und einer den Spiegel 6 freigebenden Offenstellung (illustriert in Figur 2) verschwenkt werden. In der Offenstellung befindet sich die Abdeckung 5 in einer ersten Position A (illustriert in Figur 7), während sie sich in der Schließstellung in einer zweiten Position B (illustriert in Figur 8) befindet. Zur Überführung von der ersten Position A in die zweite Position B und umgekehrt, wird die Abdeckung 5 entlang eines Bewegungspfades 100 bewegt. Die Bewegung der Abdeckung 5 wird dabei mittels eines als Biegefeder ausgebildeten Energiespeicherelements 12 unterstützt bzw. angetrieben. In einem Teilbereich 101 des gesamten Bewegungspfades 100 wird die Bewegung durch ein Verzögerungselement 8 verzögert, um eine Art "Soft-Close" Mechanismus zu integrieren und somit eine ansehnliche, gleichmäßige und dennoch zügige Öffnungs- und/oder Schließbewegung der Abdeckung 5 zu realisieren. Das Verzögerungselement 8 ist derart ausgebildet, dass eine Bewegung des Verzögerungselement 8 um eine Schwenkachse 9 gegenüber dem Rahmen 4 mittels eines adhäsiven Fetts verzögert wird und dass das Verzögerungselement 8 nur im Teilbereich 101 mit der Abdeckung 5 gekoppelt ist und daher auch nur im Teilbereich 101 mit der Abdeckung 5 mitbewegt wird. Der Anteil des Teilbereichs 101 an der Gesamtlänge des Bewegungspfades zwischen der ersten und der zweiten Position umfasst jeweils vorzugsweise zwischen 5 und 50 Prozent, besonders bevorzugt zwischen 10 und 40 Prozent und besonders bevorzugt zwischen 15 und 35 Prozent. Im Einzelnen:
Figur 1 zeigt die Sonnenblende 1 in ihrer Verschattungsstellung, in welcher sie näherungsweise vertikal zum nicht dargestellten Dachhimmel des Fahrzeugdachs eines Kraftfahrzeugs orientiert ist. Dadurch deckt sie einen oberen Teilbereich der ebenfalls nicht dargestellten Windschutzscheibe des Kraftfahrzeugs ab.

Die Sonnenblende 1 weist eine erste Flächenseite 2 und eine gegenüberliegende, nicht dargestellte zweite Flächenseite auf. In einer Vertiefung der Flächenseite 2, gut zu erkennen in den Figur 7 und 8, ist eine Funktionseinheit 3 befestigt, von der in ihrer gezeigten Nichtgebrauchsstellung nur der Rahmen 4 und die Abdeckung 5 erkennbar sind. Die Funktionseinheit 6 weist im vorliegenden Beispiel ferner den Spiegel 6 auf.

Die Figur 2 zeigt die Sonnenblende 1 aus Figur 1 in der Verschattungsstellung, mit geöffneter Abdeckung 5. Der Pfeil Y gibt dabei die Öffnungsrichtung an. Die normalerweise von der Abdeckung 5 abgedeckte Funktionseinrichtung 3 wird nun sichtbar. In dieser Ausführungsform ist lediglich der Spiegel 6 erkennbar. Bevorzugt weist die Funktionseinrichtung zusätzlich eine nicht dargestellte Beleuchtungseinrichtung auf, die z.B. im umgebenden Rahmen oder in der Abdeckung angeordnet sein kann. Wird als Leuchtmittel eine OLED (Organic Light Emitting Diode) verwendet, könnte die Beleuchtungseinrichtung auch in einen Teilbereich der Spiegelfläche integriert werden. Die Abdeckung 5 ist mit mindestens einer Gelenkverbindung 7, bevorzugt aber zwei Gelenkverbindungen 7, eine Schwenkachse 9 bildend an dem Rahmen 4 befestigt. Dabei sind die zwei Gelenkverbindungen 7 besonders bevorzugt möglichst weit voneinander auf der Schwenkachse 9 beabstandet, aber noch innerhalb der Erstreckung der Abdeckung bzw. des Rahmens entlang der Schwenkachse 9 angeordnet.

Die Figur 2 zeigt außerdem das mindestens eine Verzögerungselement 8, das in dem gezeigten Ausführungsbeispiel einem der beiden Gelenkverbindungen 7 benachbart angeordnet ist. Es ist für die besondere Kinematik der Abdeckung 5 verantwortlich und wird in den folgenden Figuren ausführlich beschrieben.

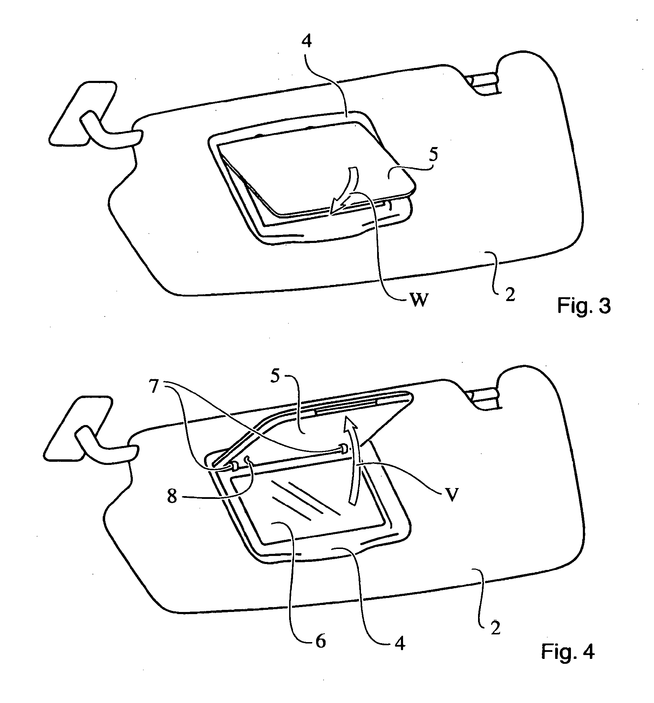

In Figur 3 ist mit dem Pfeil W angedeutet, dass sich die Abdeckung gerade in ihre Schließposition (in Richtung der zweiten Position B) bewegt. In Näherung der gezeigten Winkelstellung der Abdeckung 5 setzt zusätzlich die Verzögerung durch die Einwirkung des Verzögerungselements 8 ein.

Die Figur 4 veranschaulicht den Öffnungsvorgang der Abdeckung 5, wobei der Pfeil V die Öffnungsbewegung darstellt. In Annäherung an die nun gezeigte Winkelstellung der Abdeckung 5 setzt auch hier die durch das Verzögerungselement 8 verursachte Verzögerungswirkung ein.

Anhand der Figuren 5 und 6 soll der Aufbau des Verzögerungselements 8 in diesem Ausführungsbeispiel beschrieben werden. Anhand der Figuren 7 und 8 wird nachfolgend dessen Wirkungsweise erklärt.

In Figur 5 ist ein perspektivischer Ausschnitt der Funktionseinheit 3 mit einem Teil des Rahmens 4 dargestellt, der den Bereich der Gelenkverbindung 7 mit benachbarten Verzögerungselement 8 aus der Figur 4 vergrößert zeigt. Dort ist das Verzögerungselement 8 als ein scheibenartiges Bauteil zu erkennen, welches sich zwischen zwei einstückig an den Rahmen 4 angeformten Führungsaufnahmen 10 befindet. Die Passung zwischen Verzögerungselement 8 und jeweils benachbarter linker und rechter Führungsaufnahme 10 bietet genügend Spiel, um ein Verzögerungsmedium 11, beispielsweise ein adhäsives Fett, aufzunehmen. Dieses Fett haftet auch bei höheren Temperaturen, wie sie in einem Kraftfahrzeug auftreten können, noch sicher an den Passungsflächen.

Aus der Figur 5 ist außerdem der Energiespeicher 12 ersichtlich, der hier beispielsweise aus einer Blattfeder besteht. Denkbar ist aber auch jede andere Form eines Energiespeichers. Der Energiespeicher 12 sorgt für den Antrieb um die Abdeckung 5 aus einer der Endpositionen "geöffnet" oder "geschlossen" in die jeweils andere Endposition zu schwenken.

Figur 6 stellt einen Horizontalschnitt durch die Schwenkachse 9 entsprechend der Schnittlinie A-A aus Figur 8. dar. In ihm ist nochmals die scheibenförmige Querschnittsform des Verzögerungselements 8 und das Verzögerungsmedium 11 zwischen den beiden Führungsaufnahmen 10 zu sehen. An seinem den Führungsaufnahmen 10 abgewandten Ende ist das Verzögerungselement 8 mit Spiel drehbar auf der Schwenkachse 9 gelagert. Eine Drehbewegung der Schwenkachse 9 hat also keine Auswirkung auf die Winkelauslenkung des Verzögerungselements 8.

Die Figur 7 stellt in einem Vertikalschnitt durch das Verzögerungselement 8 die Wirkweise beim Schließvorgang der Abdeckung dar. Aus der ersten Endposition A, die hier einer vollständig geöffneten Abdeckung 5 entspricht, wird die Abdeckung 5 um die Schwenkachse 9 nach unten geschwenkt. Bei Erreichen der ersten Zwischenposition C kommt die erste Mitnahmegeometrie 13 mit einer komplementären Anlagefläche des Verzögerungselements 8 in Kontakt und zwingt dieses bei weiterer gleichgerichteter Verschwenkung der Bewegung der Abdeckung 5 zu folgen. Die Antriebsenergie des Energiespeichers 12 veranlasst die Abdeckung 5 sich weiter gegen den Widerstand des Verzögerungsmedium 11 in Richtung der zweiten Endposition B zu bewegen, bis diese erreicht ist.

Die Figur 8 stellt in einem Vertikalschnitt durch das Verzögerungselement 8 die Wirkweise beim Öffnungsvorgang der Abdeckung dar. Ausgehend von der zweiten Endposition B, die den geschlossenen Zustand der Abdeckung 5 darstellt, wird die Abdeckung 5 durch Schwenken um die Schwenkachse 9 nach oben geöffnet. Bei Erreichen der zweiten Zwischenposition D kontaktiert eine zweite Mitnahmegeometrie 14 der Abdeckung 5, die z.B. als angeformte Nase ausgebildet ist, eine komplementäre Anlagefläche des Verzögerungselements 8 und zwingt dieses bei weiterer gleichgerichteter Verschwenkung der Bewegung der Abdeckung 5 zu folgen. Diese Co-Bewegung erfolgt wieder gebremst durch das Verzögerungsmedium 11 bis die Abdeckung 5 ihre erste Endposition A erreicht hat.

### BEZUGSZEICHENLISTE

- 1: Sonnenblende
- 1': Innenausstattungsteil
- 2: erste Flächenseite
- 3: Funktionseinheit
- 4: Rahmen
- 4': erstes Bauteil
- 5: Abdeckung
- 5': zweites Bauteil
- 6: Spiegel
- 6': Funktionselement
- 7: Gelenkverbindung
- 8: Verzögerungselement
- 9: Schwenkachse
- 10: Führungsaufnahme
- 11: Verzögerungsmedium
- 12: Energiespeicher
- 13: erste Mitnahmegeometrie
- 14: zweite Mitnahmegeometrie
- 100: Bewegungspfad
- 101: Teilbereich

- A: erste Endposition
- B: zweite Endposition
- C: erste Zwischenposition
- D: zweite Zwischenposition
- Y: Öffnungsrichtung
- V: Öffnungsbewegung
- W: Schließbewegung

## Patentansprüche

1. Bewegungseinrichtung für ein Innenausstattungsteil (1') in einem Kraftfahrzeug, wobei die Bewegungseinrichtung ein erstes Bauteil (4') und ein zweites Bauteil (5') umfasst, wobei das zweite Bauteil (5') relativ zum ersten Bauteil (4') zwischen einer ersten Position (A) und einer zweiten Position (B) bewegbar ist, wobei die Bewegungseinrichtung ein Energiespeicherelement (12) umfasst, welches zum Bewegen des zweiten Bauteils (4') in Richtung der ersten Position (A) und/oder in Richtung der zweiten Position (B) vorgesehen ist, wobei die Bewegungseinrichtung ferner ein Verzögerungselement (8) aufweist, welches die Bewegung des zweiten Bauteils (4') in Richtung der ersten Position (A) und/oder in Richtung der zweiten Position (B) teilweise verzögert, wobei das zweite Bauteil (5') eine erste Mitnahmegeometrie (13) aufweist, welche in einer ersten Zwischenposition (C) mit einem komplementären ersten Anlagebereich des Verzögerungselements (8) während der Bewegung des zweiten Bauteil (5') von der ersten Position (A) in die zweite Position (B) in Anlage bringbar ist, **dadurch gekennzeichnet, dass** die erste Mitnahmegeometrie (13) eine Einbuchtung im zweiten Bauteil (5') umfasst, in welche zur Mitnahme des Verzögerungselements während der Bewegung des zweiten Bauteils (5') von der ersten Zwischenposition (C) in die zweite Position (B) der als Ausbuchtung ausgebildete erste Anlagebereich eingreift.

2. Bewegungseinrichtung nach Anspruch 1, wobei das zweite Bauteil (5') zwischen der ersten und der zweiten Position (A, B) entlang eines Bewegungspfades bewegbar ist, wobei das Verzögerungselement (8) derart ausgebildet ist, dass die Bewegung des zweiten Bauteils (4') in Richtung der ersten Position (A) und/oder in Richtung der zweiten Position (B) nur in einem Teilbereich (101) des gesamten Bewegungspfades (100) verzögert wird.

3. Bewegungseinrichtung nach einem der vorhergehenden Ansprüche, wobei das zweite Bauteil (5') über wenigstens eine Gelenkverbindung (7) an das erste Bauteil (4') angebunden ist, wobei das zweite Bauteil (5') mittels der Gelenkverbindung (7) relativ zum ersten Bauteil (4') um eine Schwenkachse (9) schwenkbar ist.

4. Bewegungseinrichtung nach Anspruch 3, wobei das Verzögerungselement (8) benachbart zu der wenigstens einen Gelenkverbindung (7) angeordnet ist und/oder dass das Verzögerungselement um die Schwenkachse (9) schwenkbar sowohl relativ zum ersten Bauteil (4'), als auch relativ zum zweiten Bauteil (5') gelagert ist.

5. Bewegungseinrichtung nach einem der vorhergehenden Ansprüche, wobei das Verzögerungselement (8) ein scheibenartiges Bauelement umfasst, welches zwischen zwei Führungsaufnahmen (10) des ersten Bauteils (4') angeordnet ist, wobei zwischen dem scheibenartigen Bauelement und den Führungsaufnahmen (10) jeweils ein Verzögerungsmedium (11), insbesondere ein zähflüssiges Verzögerungsmedium, angeordnet ist.

6. Bewegungseinrichtung nach Anspruch 5, wobei das Verzögerungsmedium (11) adhäsives Fett umfasst.

7. Bewegungseinrichtung nach einem der vorhergehenden Ansprüche, wobei das zweite Bauteil (5') eine zweite Mitnahmegeometrie (14) aufweist, welche in einer zweiten Zwischenposition (D) mit einem komplementären zweiten Anlagebereich des Verzögerungselements (8) während der Bewegung des zweiten Bauteils (5') von der zweiten Position (B) in die erste Position (A) in Anlage bringbar ist.

8. Bewegungseinrichtung nach Anspruch 7, wobei die zweite Mitnahmegeometrie (14) eine nasenförmigen Vorsprung des zweiten Bauteils (5') umfasst, welcher zur Mitnahme des Verzögerungselements während der Bewegung des zweiten Bauteils (5') von der zweiten Zwischenposition (D) in die erste Position (A) in den als Nut ausgebildete zweite Anlagebereich eingreift.

9. Bewegungseinrichtung nach einem der vorhergehenden Ansprüche, wobei die Bewegungseinrichtung ferner ein Funktionselement (6') aufweist, wobei das zweite Bauteil (5') eine zwischen einer geschlossenen Position und einer geöffneten Position bewegbare Abdeckung (5) für das Funktionselement (6') umfasst, wobei das erste Bauteil (4') vorzugsweise einen Rahmen für das Funktionselement (6') umfasst.

10. Bewegungseinrichtung nach Anspruch 9, wobei das Funktionselement (6') einen Spiegel (6), ein Ablagefach, einen Aschenbecher und/oder einen Handgriff umfasst und/oder wobei das Innenausstattungsteil (1') eine Sonnenblende (1) umfasst.

11. Innenausstattungsteil in einem Kraftfahrzeug aufweisend eine Bewegungseinrichtung nach einem der vorhergehenden Ansprüche.

## Claims

1. A movement device for an interior trim part (1') in a motor vehicle, wherein the movement device comprises a first component (4') and a second component (5'), wherein the second component (5') can be moved relative to the first component (4') between a first position (A) and a second position (B), wherein the movement device comprises an energy storage element (12) provided to move the second component (4') toward the first position (A) and/or toward the second position (B), wherein the movement device further comprises a delay element (8) which partially delays the movement of the second component (4') toward the first position (A) and/or toward the second position (B), wherein the second component (5') exhibits a first driver geometry (13) which can be moved up against a complementary first contact region of the delay element (8) in a first intermediate position (C) during the movement of the second component (5') from the first position (A) into the second position (B),
**characterized in that**
the first driver geometry (13) comprises an indentation in the second component (5') into which the first contact region configured as a protrusion engages to drive the delay element during the movement of the second component (5') from the first intermediate position (C) into the second position (B).

2. The movement device according to claim 1, wherein the second component (5') can be moved along a trajectory between the first and the second position (A, B), wherein the delay element (8) is configured such that the movement of the second component (4') toward the first position (A) and/or toward the second position (B) is only delayed in a part (101) of the total trajectory (100).

3. The movement device according to one of the preceding claims, wherein the second component (5') is connected to the first component (4') by at least one hinge connection (7), whereby the second component (5') is pivotable about a rotational axis (9) relative to the first component (4') by way of the hinge connection (7).

4. The movement device according to claim 3, wherein the delay element (8) is arranged adjacent to the at least one hinge connection (7) and/or the delay element is pivotably mounted about the rotational axis (9) relative to both the first component (4') as well as relative to the second component (5').

5. The movement device according to any one of the preceding claims,
wherein the delay element (8) comprises a disk-like structural element arranged between two guide receptacles (10) of the first component (4'), wherein a respective delaying medium (11), particularly a viscous delaying medium, is arranged between the disk-like structural element and the guide receptacles (10).

6. The movement device according to claim 5, wherein the delaying medium (11) comprises adhesive grease.

7. The movement device according to any one of the preceding claims,
wherein the second component (5') exhibits a second driver geometry (14) which can be moved up against a complementary second contact region of the delay element (8) in a second intermediate position (D) during the movement of the second component (5') from the second position (B) into the first position (A).

8. The movement device according to claim 7, wherein the second driver geometry (14) comprises a lug-shaped projection of the second component (5') which engages into the second contact region configured as a groove during the movement of the second component (5') from the second intermediate position (D) into the first position (A) to drive the delaying element.

9. The movement device according to any one of the preceding claims, wherein the movement device further comprises a functional element (6'), wherein the second component (5') comprises a cover (5) for the functional element (6') which is movable between a closed position and an open position, wherein the first component (4') preferably comprises a frame for the functional element (6').

10. The movement device according to claim 9, wherein the functional element (6') comprises a mirror (6), a storage compartment, an ashtray and/or a handle and/or wherein the interior trim part (1') comprises a sun visor (1).

11. An interior trim part in a motor vehicle comprising a movement device in accordance with any one of the preceding claims.

## Revendications

1. Système de déplacement pour une pièce d'équipement intérieur (1') dans un véhicule automobile, dans lequel le système de déplacement inclut un premier composant (4') et un second composant (5'), ledit second composant (5') étant déplaçable par rapport au premier composant (4') entre une première position (A) et une seconde position (B), ledit système de déplacement incluant un élément d'accumulation d'énergie (12) qui est prévu pour déplacer le second composant (4') en direction de la première position (A) et/ou en direction de la seconde position (B), dans lequel le système de déplacement comprend en outre un élément retardateur (8), qui retarde partiellement le déplacement du second composant (4') en direction de la première position (A) et/ou en direction de la seconde position (B), dans lequel le second composant (5') comporte une première géométrie d'entraînement (13) qui, dans une première position intermédiaire (C), peut être amenée en contact avec une première zone de contact complémentaire de l'élément retardateur (8) pendant le déplacement du second composant (5') depuis la première position (A) vers la seconde position (B),
**caractérisé en ce que**
la première géométrie d'entraînement (13) comporte un creux dans le second composant (5') dans lequel s'engage la première zone de contact, réalisée sous forme de relief, pour l'entraînement de l'élément retardateur pendant le déplacement du second composant (5') depuis la première position intermédiaire (C) jusque dans la seconde position (B).

2. Système de déplacement selon la revendication 1, dans lequel le second composant (5') est déplaçable entre la première et la seconde position (A, B) le long d'un trajet de déplacement, et l'élément retardateur (8) est réalisé de telle façon que le déplacement du second composant (4') en direction de la première position (A) et/ou en direction de la seconde position (B) est retardé uniquement dans une zone partielle (101) de la totalité du trajet de déplacement (100).

3. Système de déplacement selon l'une des revendications précédentes, dans lequel le second composant (5') est relié au premier composant (4') via au moins une liaison articulée (7), et le second composant (5)') est capable de pivoter autour d'un axe de pivotement (9) par rapport au premier composant (4') au moyen de la liaison articulée (7).

4. Système de déplacement selon la revendication 3, dans lequel l'élément retardateur (8) est agencé au voisinage de ladite au moins une liaison articulée (7) et/ou en ce que l'élément retardateur est monté en pivotement autour de l'axe de pivotement (9) aussi bien par rapport au premier composant (4') que par rapport au second composant (5').

5. Système de déplacement selon l'une des revendications précédentes, dans lequel l'élément retardateur (8) comprend un élément constitutif en forme de plaque, qui est agencé entre deux logements de guidage (17) du premier composant (4') et un milieu retardateur (11) respectif, en particulier un milieu retardateur visqueux, est agencé entre l'élément constitutif en forme de plaque et les logements de guidage (10).

6. Système de déplacement selon la revendication 5, dans lequel le milieu retardateur (11) comprend une graisse adhésive.

7. Système de déplacement selon l'une des revendications précédentes, dans lequel le second composant (5') comporte une seconde géométrie d'entraînement (14) qui, dans une seconde position intermédiaire (D), peut être amenée en contact avec une seconde zone de contact complémentaire de l'élément retardateur (8) pendant le déplacement du second composant (5') depuis la seconde position (B) vers la première position (A).

8. Système de déplacement selon la revendication 7, dans lequel la seconde géométrie d'entraînement (14) comprendre une saillie en forme d'ergot du second composant (5'), qui s'engage, pour l'entraînement de l'élément retardateur pendant le déplacement du second composant (5') depuis la seconde position intermédiaire (D) jusque dans la première position (A), dans la seconde zone de contact réalisée sous forme de gorge.

9. Système de déplacement selon l'une des revendications précédentes, dans lequel le système de déplacement comprend en outre un élément fonctionnel (6'), dans lequel le second composant (5') comprend un recouvrement (5), déplaçable entre une position fermée et une position ouverte, pour l'élément fonctionnel (6'), et dans lequel le premier composant (4') inclut de préférence un cadre pour l'élément fonctionnel (6').

10. Système de déplacement selon la revendication 9, dans lequel l'élément fonctionnel (6') inclut un miroir (6), un vide-poche, un cendrier et/ou une poignée, et/ou dans lequel la pièce d'équipement intérieur (1') comprend un pare-soleil (1).

11. Pièce d'équipement intérieur dans un véhicule automobile, comprenant un système de déplacement selon l'une des revendications précédentes.
